# EUROPEAN PATENT APPLICATION

(11) **EP 1 577 781 A1**
(43) Date of publication of application: **21.09.2005**
(21) Application number: 03789600.8
(22) Date of filing: 17.12.2003
(51) Int. Cl.: G06F 12/14, G11B 20/10

(54) **DATA RECORDING PROGRAM, INFORMATION RECORDING MEDIUM, DATA RECORDING TERMINAL, DATA RECORDING SYSTEM, AND DATA RECORDING METHOD**

(30) Priority: 27.12.2002 JP 2002379133; 08.12.2003 JP 2003408534
(71) Applicant: KONICA MINOLTA HOLDINGS, INC., Tokyo 100-0005 (JP)
(72) Inventor: UEDA, Yutaka Konica Minolta Photo Imaging, Inc, Hachioji-shi, Tokyo 192-8505 (JP); TAKEMURA, Koji Konica Minolta Photo Imaging, Inc., Hachioji-shi, Tokyo 192-8505 (JP)
(74) Representative: Henkel, Feiler & Hänzel
(86) International application number: PCT/JP2003/016153
(87) International publication number: WO 2004/061679

(57) **Abstract**

It is possible to prevent fraudulent recording of data because a check is made as to whether or not the information recording medium 9 was purchased correctly at the cash register 5, and because the information recording media 9 in which has been recorded the write disable information indicating that the writing of data in it has been prohibited are stacked on a shop shelf 4, and a section is provided in the cash register 5 for recording in the information recording medium 9 the write disable release information indicating that the disabling of the writing of data has been released, and because in the data recording terminal 3 is provided, at least, a data recording section that prohibits the writing of data in the information recording medium 9 in which the write disable information has been written and also permits the writing of data in the information recording medium 9 in which the write disable release information has been written.

## Description

### TECHNICAL FIELD

The present invention relates to data recording programs as well as information recording media, data recording terminals, data recording systems, and data recording methods, and in particular to, a data recording program along with information recording medium, data recording terminal, data recording system, and data recording method for recording or backing up the image data of photographs taken using photographing equipment such as digital cameras.

### BACKGROUND

In recent years, along with the proliferation of photographing equipment such as digital cameras or mobile telephones with cameras, the number of consumers using the images of photographs as digital data is increasing. In digital cameras or mobile telephones with cameras, the images of photographs are recorded either in a recording section built in to the equipment or in various types of storage media that can be inserted into or removed from the equipment, and although the images of photographs can be viewed using the display section of the equipment, since the data size of images of photographs is large and since the storage capacity of the storage section incorporated into the equipment or of the removable storage medium is not quite large, it is necessary for customers taking photographs very frequently to store the image data of photographs in a separate storage section or storage medium.

In view of this, in the case of a user familiar with operating a personal computer (PC), it is possible to accumulate the image data in a PC by reading in the image data after inserting into the slot of the PC the different types of media mounted in a digital camera, or by transferring the image data of the photographed pictures to the PC after connecting to it the digital camera or the mobile telephone with camera, and thereafter it is possible to display and view the image data using application programs installed beforehand in the PC.

However, for users who are not familiar with operating a PC, the operations of reading in image data from digital cameras, mobile telephones with cameras, or from various types of media is not easy. In view of this, it is desirable to have a method of backing up image data of photographs without using a PC, and, for example, in Japanese Patent Publication Open to Public Inspection No. No. 2002-185896, a method of and system for data processing service has been disclosed that makes it possible to back up very easily the image data of photographs taken using a digital camera.

According to the above disclosure, for the problems that since the capacity of the recording media built into or provided as accessory to a compact and lightweight digital camera is about 8 to 16 Mbytes and since the data size becomes nearly 1 Mbytes for an image photographed in the high image quality mode it is possible to photograph at best ten photographs using such a medium and also that it is not possible to buy a number of spare recording media because they were costly, a method of solving the problems has been disclosed for providing the service of backing up image data using a service terminal installed in a shop which method comprises a step of reading photographed image data stored in the memory of the customer's digital camera and a step of storing the read in photographed image data in a recording medium that the customer can access.

Patent Document 1: Japanese Patent Publication Open to Public Inspection No. 2002-185896 (page 3 to 7, Figure 1)

Using the method disclosed in the above official publication, even when a compact and lightweight digital camera with a capacity of a relatively small number of photographs is used, by taking the digital camera to a shop with a service terminal it is possible to store the image data of the digital camera without having to buy expensive recording media and hence it is possible to use a compact and lightweight digital camera without thinking about the size of the photographed image data or the tediousness of saving or printing such data. However, this method had the following problems.

In other words, when using such a service terminal, the ID of the digital camera is recorded in the recording medium (an MO disk in the above disclosure) for backing up the image data, and it is necessary to carry this MO disk along with the digital camera at all times, and also, in case the user forgets to take this MO disk, it will not be possible to use the service terminal.

In addition, although there is the method of selling the recording media for backing up in the shop in which the service terminal has been installed (such as DPE shop, a convenience store, or a train station shop, etc.,), since it is not possible to distinguish whether the recording medium inserted into the service terminal is the one that has been bought at the shop or one that has been brought by the customer, or is one that the customer has shoplifted from the store shelf without paying for it at the cash register, it is possible that fraudulent backing is done, and hence the load on the shop employees increases for monitoring whether or not such fraudulent backing up is being made.

### SUMMARY

The present invention has been made in view of the above problems and its main purpose is to provide a data recording program as well as information recording medium, a data recording terminal, a data recording system, and a data recording method that make it possible to check easily whether or not information recording medium inserted into the data recording terminal is a legally purchased one.

In order to achieve the above objective, the data recording program according to the present invention causes the computer to function as a section for extracting from the information recording medium the write enable information indicating that writing of data has been permitted, and a data writing section that permits the writing of data for the information recording medium in which the write enable information has been written.

In addition, the data recording program according to the present invention causes the computer to function as a section for extracting from the information recording medium the write disable information indicating that writing of data has been prohibited, as a section for extracting from the information recording medium the write disable release information indicating that disabling of writing of data has been released, and a data writing section that disables the writing of data for the information recording medium in which the write disable information has been written and also permits the writing of data for the information recording medium in which the write disable release information has been written.

Further, the information recording medium according to the present invention is one in which have been recorded the write disable information indicating that writing of data has been prohibited or the write enable information indicating that writing of data has been permitted.

Still further, the information recording medium according to the present invention is one in which have been recorded the write disable information indicating that writing of data has been prohibited or the write disable release information indicating that the disabling of writing of data has been released.

Furthermore, the data recording terminal according to the present invention is a data recording terminal that records the data recorded in an equipment or in a first information recording medium into a second information recording medium, and has the feature that it comprises at least a section for reading out the data from either the equipment or the first information recording medium, a section for extracting from the second information recording medium the write enable information indicating that writing of data has been permitted, a section for extracting from the second information recording medium the write disable release information indicating that disabling of writing of data has been released, and a data writing section that permits the writing of data in the second information recording medium in which the write enable information has been written.

In addition, the data recoding terminal according to the present invention is a data recording terminal that records the data recorded in an equipment or a first information recording medium into a second information recording medium, and has the feature that it comprises at least a section for reading out the data from either the equipment or the first information recording medium, a section for extracting from the second information recording medium the write disable information indicating that the writing of data has been prohibited, a section for extracting from the second information recording medium the write disable release information indicating that disabling of writing of data has been released, and a data writing section that prohibits the writing of data in the second information recording medium in which the write disable information has been written and also permits the writing of data in the second information recording medium in which the write disable release information has been written.

In the present invention, it is desirable that the equipment is a digital camera or a mobile telephone with camera, the first information recording medium is an information recording medium that can be inserted into and removed from the equipment, and that the data is image data of photographs taken using the equipment.

Furthermore, the data recording system according to the present invention comprises at least a write enable information recording section that records in the information recording medium the write enable information indicating that data writing has been permitted, and a data writing section that enables the writing of data in the information recording medium in which the write enable information has been recorded.

In addition, the data recording system according to the present invention comprises at least an information recording medium in which is recorded the write disable information indicating that data writing in it has been prohibited, a write disable release information recording section that records in the information recording medium the write disable release information indicating the disabling of writing due to the write disable information has been released, and a data writing section that prohibits the writing of data in the information recording medium in which the write disable information has been recorded and also permits the writing of data in the information recording medium in which the write disable release information has been recorded.

Further, the data recording method according to the present invention is a data recording method of recording the data recorded in an equipment or in a first information recording medium brought by the customer into a second information recording medium that the customer has purchased, and comprises at least a step of recording in the second information recording medium purchased by the customer the write enable information indicating that the writing of data in it has been permitted, a step in a data recording terminal of extracting the write enable information from the second information recording medium, and when the write enable information has been recorded, a step of reading out the data recorded in the equipment or in the first information recording medium and writing it in the second information recording medium.

Still further, the data recording method according to the present invention is a data recording method of recording the data recorded in an equipment or in a first information recording medium brought by the customer into a second information recording medium that the customer has purchased, and comprises at least a step of exhibiting on shop shelves information recording media in which write disable information has been recorded indicating that the writing of data in them has been prohibited, a step of recording in the second information recording medium the write disable release information indicating that the disabling of writing due to the write disable information in the second information recording medium purchased by the customer has been released, a step in a data recording terminal of extracting the write disable information from the second information recording medium, a step of extracting the write disable release information from the second information recording medium, a step of making the decision to prohibit the writing of data in the second information recording medium if the write disable information has been recorded in it or to permit the writing of data if the write disable release information has been recorded in it, and a step of reading out the data recorded in the equipment or in the first information recording medium and writing it in the second information recording medium based on the decision of prohibiting or permitting the writing of data in it.

As has been explained above, according to the configuration of the present invention, when the customer properly purchases the information recording medium for recording the image data, by recording the write enable information in the information recording medium indicating that the writing of data in to that information recording medium has been permitted, and by referring to the write enable information in the data recording terminal, it is easily possible to distinguish the information recording medium that does not have recorded in it the write enable information such as an information recording medium that has been brought along by the customer or that has been fraudulently picked up by the customer from the shop shelf, and hence it is possible to prevent easily and without fail fraudulent data recording.

Further, after writing beforehand the write disable information in the information recording medium indicating that writing of data in to that information recording medium is prohibited and also by writing the write disable release information in an information recording medium that has been correctly purchased indicating that the write disable of that medium has been released, by referring to the write disable information and the write disable release information in the data recording terminal, it is possible to distinguish easily an information recording medium that does not have recorded in it both the write disable information and the write disable release information such as an information recording medium that has been brought along by the customer or an information recording medium that has recorded in it only the write disable information such as a medium that has been fraudulently picked up by the customer from the shop shelf, and hence it is possible to prevent easily and without fail fraudulent data recording.

### BRIEF DESCRIPTION OF THE DRAWINGS

Figure 1: This is a diagram showing schematically the configuration of the data recording system according to a preferred embodiment of the present invention.
Figure 2: This is a block diagram showing the functions of the data recording terminal according to the first preferred embodiment of the present invention.
Figure 3: This is a flow chart showing the procedure of recording the data according to the first preferred embodiment of the present invention.
Figure 4: This is a diagram showing schematically the configuration of the data recording system according to the second preferred embodiment of the present invention.
Figure 5: This is a block diagram showing the functions of the data recording terminal according to the second preferred embodiment of the present invention.
Figure 6: This is a flow chart showing the procedure of recording the data according to the second preferred embodiment of the present invention.
Figure 7: This is a diagram showing schematically the configuration of the data recording terminal according to the third preferred embodiment of the present invention.
Figure 8: This is a block diagram showing the functions of the data recording terminal according to the third preferred embodiment of the present invention.
Figure 9: This is a flow chart showing the procedure of recording the data according to the third preferred embodiment of the present invention.
Figure 10: This is a diagram showing schematically another configuration of the data recording system according to the present invention.
Figure 11: This is a diagram showing schematically another configuration of the data recording system according to the present invention.
Figure 12: This is a diagram showing schematically another configuration of the data recording system according to the present invention.
Figure 13: This is a diagram showing schematically yet another configuration of the data recording system according to the present invention.

### DESCRIPTION OF THE PREFERRED EMBODIMENT

The data recording system according to a preferred embodiment of the present invention is one in which a plurality of information recording media having recorded in them the write disable information indicating that writing of data in to them has been prohibited are stacked on the shop shelf, the cash register is equipped with a section for recording into the information recording media the write disable release information indicating that the write disabling of the media due to the write disable information has been released, and since the data recording terminal is provided with at least a data writing section that prohibits the writing of data to an information recording medium in which is recorded only the write disable information and permits the writing of data to an information recording medium in which are recorded both the write disable information and the write disable release information, and since the information recording medium inserted into the data recording terminal is checked automatically as to whether or not that information recording medium was one that has been purchased legally at the cash register, it is possible to prevent fraudulent recording of data. In addition, because it is possible to record image data without having to use a personal computer, it is possible to promote taking photographs using a digital camera, etc., and to enlarge the use of various types of services using image data.

Further detailed explanations of some preferred embodiments of the present invention described above are given in the following paragraphs while referring to the drawings.

### [Preferred Embodiment 1]

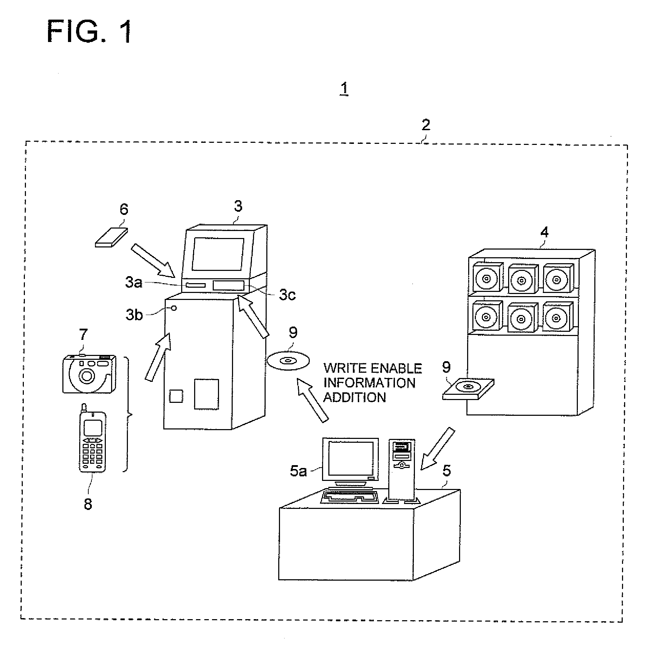

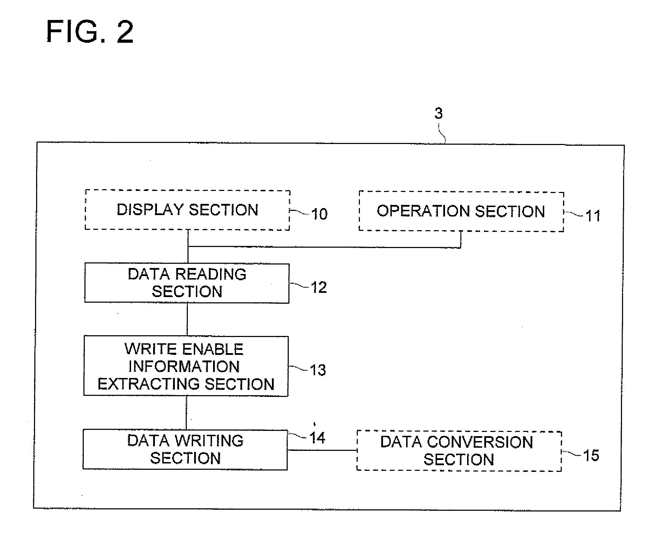

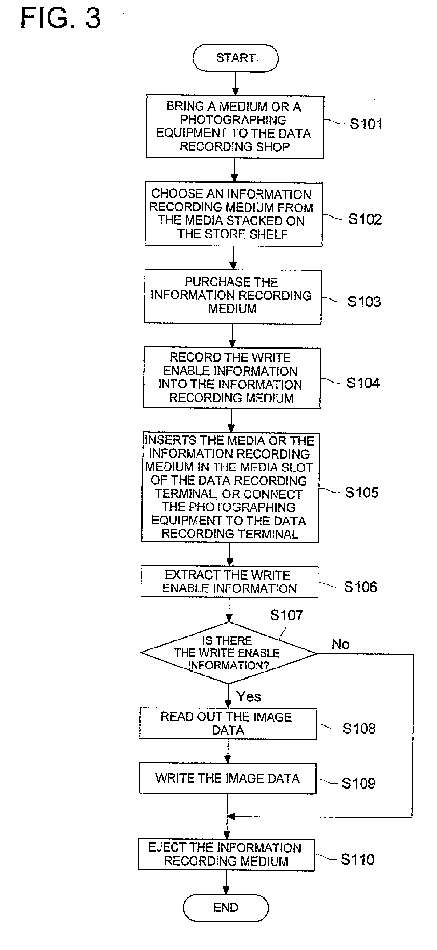

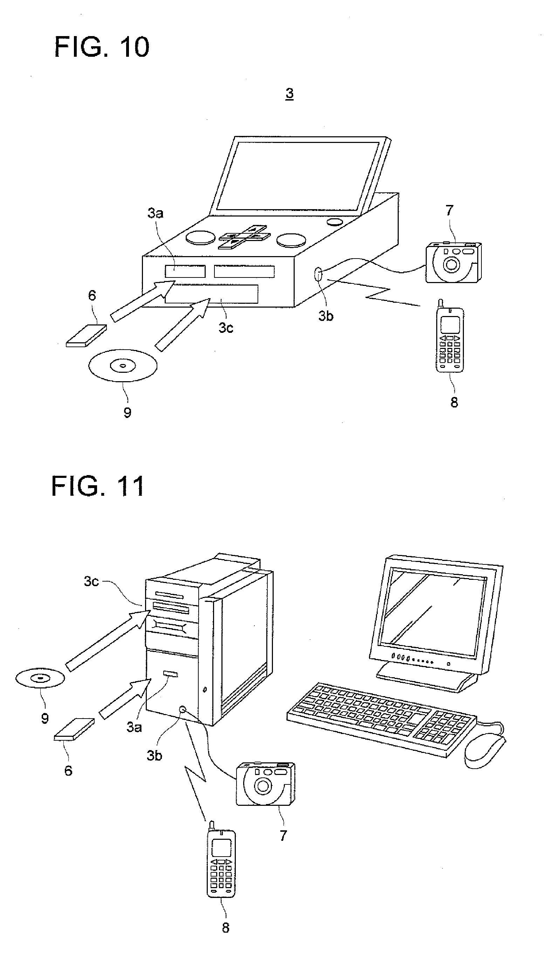

To begin with, the data recording program along with information recording medium, data recording terminal, data recording system, and data recording method according to the first preferred embodiment of the present invention are explained below while referring to Figure 1 to Figure 3 and Figure 10 to Figure 13. Figure 1 is a diagram showing schematically the configuration of the data recording system according to the present preferred embodiment, and Figure 2 is a block diagram showing the functions of the data recording terminal. Further, Figure 3 is a flow chart showing the procedure of recording the data, and Figure 10 to Figure 13 are diagrams showing schematically other configurations of the data recording system according to the present preferred embodiment. In addition, the present preferred embodiment has the feature that fraudulent data recording is prevented using only the write enable information.

As is shown in Figure 1, the data recording system 1 in the present preferred embodiment is one that is installed in a convenience store or a photo service shop such as a minilab, etc., and comprises a data recording terminal 3 that records the image data in a medium 6 that has the image data of photographs recorded therein, such as a Smart Media, Compact Flash®, Memory Stick®, SD Memory Card, and Multimedia Card, etc., (here, the information recording media used in digital cameras, etc., are called simply the 'media') or the image data recorded in photographing equipment photographing pictures such as digital cameras or mobile telephones with cameras (hereinafter, all digital equipment provided with camera functions are comprehensively called 'photographing equipment') into another information recording medium 9 such as a CD-R/RW disk, a DVD±R/RW disk, a DVD-RAM disk, a Blu-ray disk, or an MO disk, etc., a shop shelf 4 on which are stacked the information recording media 9, and the cash register 5 for selling to the customers the information recording media 9 after recording in them the write enable information indicating that data writing into that information recording media 9 has been permitted. In addition, the data recording terminal 3 is provided with a media slot 3a for reading out image data from various types of media 6 brought in by the customer, the connection pins 3b for connecting the photographing equipment such as digital cameras or mobile telephones with cameras 8, etc., and a drive (such as a CD-R drive 3c) for writing the image data read out from these media 6 or from the photographing equipment into the information recording media 9 such as a CD-R/RW disk, a DVD±R/RW disk, a DVD-RAM disk, a Blu-ray disk, or an MO disk, etc.

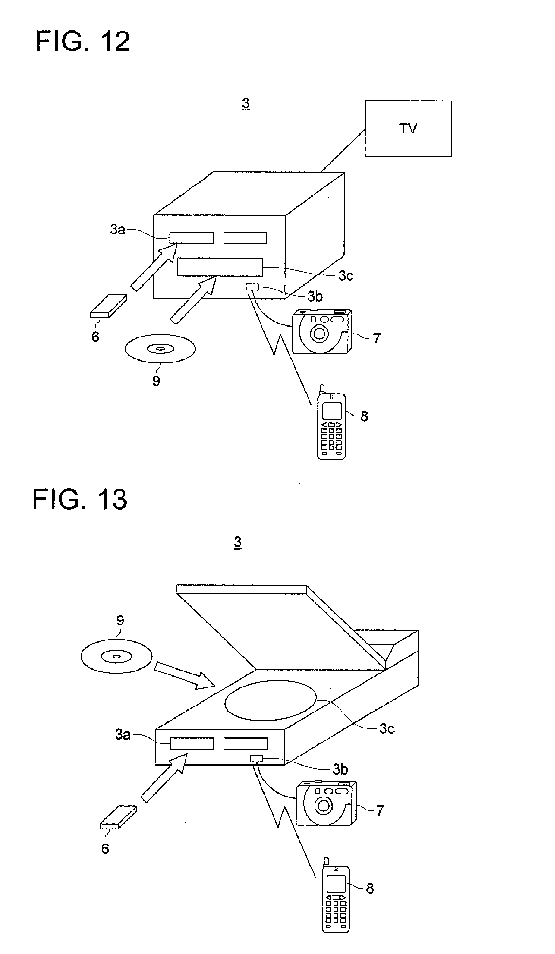

When explained in terms of its functions, this data recording terminal 3 becomes as shown in Figure 2 and is provided with a data reading section 12 that reads in image data from a media 6 or from a photographing equipment, a write enable information extracting section 13 that extracts the write enable information from an information recording medium 9, and a data writing section 14 that writes, after referring to the write enable information, the image data read in from a media 6 or from a photographing equipment into the information recording medium 9. In addition, if necessary, it is also possible to provide a display section 10 or an operation section 11 that is used for giving instructions regarding the data recording operations, and a data conversion section 15 that converts the format, name, or size, etc., of the image data read in from the media 6 or from the photographing equipment according to the wishes of the customer or to suit the photo service. Further, each of the above section can be configured as hardware, or else, it is also possible to configure each of these section by installing in the data recording terminal 3 a data recording program that makes the computer function, at least, as the write enable information extracting section 13 and the data writing section 14. In addition, although in Figure 1 a kiosk type data recording terminal 3 has been shown that can be installed in the shop site of a photo shop or a convenience store, the form of the data recording terminal 3 can be any thing, and, for example, it is possible to make this have a form such as a desk-top type shop-counter terminal as shown in Figure 10, or can be a PC in which the above software (data recording program) is installed as shown in Figure 11, or can be a dedicated set-top box as shown in Figure 12, or can be configured as a portable writer as shown in Figure 13, and can also be a DVD recorder, etc., that is provided with a storage section or a computing section.

Using a data recording terminal 3 having the above configuration, the procedure of recording the image data read from the media 6 or the photographing equipment brought in by the customer in the information recording medium 9 is described here referring to the flow chart shown in Figure 3. However, although in the explanation given below, the data to be recorded in the information recording medium 9 is taken to be image data based on photographs photographed using a digital camera 7 or a mobile telephone with camera 8, it is not necessary that the image data be limited to that based on photographs but can be moving picture data or voice data, or can also be some data obtained through the internet.

To start with, in Step S101, the customer brings a medium 6 or a photographing equipment in which image data has been recorded to the data recording shop 2 such as a convenience store or a photo shop in which a data recording terminal 3 has been installed. Although here the configuration is such that in the same data recording shop 2 are installed a data recording terminal 3, a store shelf 4, and a cash register 5, it is not necessary that all these are installed within the same shop, and it is possible, for example, to carry out data recording using a data recording terminal installed in one using an information recording medium 9 purchased legally in another shop.

Next, in Step S102, the customer chooses an information recording medium 9 from the media stacked on the store shelf 4. Further, it is enough that this information recording medium 9 is a medium having enough storage capacity to record the image data recorded in the media 6 or in the photographing equipment, and although it is possible to use any recording medium such as a CD-R/RW disk, a DVD±R/RW disk, a DVD-RAM disk, a Blu-ray disk, or an MO disk, etc., if we consider that the image data recorded in the information recording medium 9 is to be used in a computer terminal such as a PC, it is desirable that the media is one that can be read out generally in a common PC. In the following, the explanations are given assuming that the information recording medium 9 is a CD-R disk.

In addition, since the information recording media 9 stacked on the store shelf 4 are different from the common information media in which no information has been recorded (called a blank CD-R disk) in that they are sold after adding the price for data recording, it is desirable that they can be distinguished from a blank CD-R, and it is possible, for example, that their added value is increased by providing a specific design print on the surface of the CD-R.

Next, in Step S103, when the customer purchases the information recording medium 9 by paying a specific price at the cash register, in Step S104, the shop attendant of the data recording shop 2 inserts the information recording medium 9 purchased by the customer into the computer terminal 5a, operates the computer terminal 5a thereby writing in the information recording medium 9 the write enable information indicating that writing data in it has been enabled. The content of this write enable information is not particularly limited and it is possible to have a configuration of this information so that the data indicating that writing is enabled (copy authorization key) or files are stored in a specific area of the information recording medium 9, or else the write enable condition is distinguished by the fact that a specific data or file has not been recorded in a specific area of the information recording medium 9. In addition, it is possible to affix a second information recording medium that can be written into or read out from by wireless section on the information recording medium, and the write enable information is recorded in this second information recording medium. Further, it is desirable that the write enable information has been processed so that it cannot be copied easily by the customer. For example, it is possible to prevent fraudulent copying by recording the write enable information in an area that cannot be accessed by the OS of the PC (that is, outside the logical address area), in concrete terms, by writing in the area on the inside of the logical address area of a disk-type recording media.

Next, in Step S105, the customer who has bought the information recording medium 9 legally inserts the media 6 in the media slot 3a of the data recording terminal 3 (or connects the digital camera 7 or the mobile telephone with camera 8 to the connecting pins 3b, or both) and also inserts the information recording medium 9 in the CD-R drive 3c of the data recording terminal 3. Further, although in Figure 1 the media slot 3a has been taken to be an all-in-one type of media slot that can read various types of media 6, it is also possible to have a configuration in which a plurality of media slots are provided corresponding to different types of media 6. In addition, although the CD-R drive 3c is provided because the information recording medium 9 is taken to be a CD-R disk in the present preferred embodiment, it is possible to provide drives such as a DVD drive or an MO drive depending on the type of the information recording medium 9 when a DVD-R or an MO disk is to be used instead of a CD-R disk.

Next, in Step S106, the data recording terminal 3 searches for the write enable information from the information recording medium 9 (searches for the data or file corresponding to the write enable information) using the write enable information extracting section 13. If the write enable information has not been recorded in the information recording medium 9 (Step S107), it is judged that a fraudulent information recording medium has been inserted, the information recording medium is ejected and the processing is terminated in Step S110.

Further, if the write enable information has been recorded in the information recording medium 9 (Step S107), the image data recorded in the medium 6 or the image data recorded in the photographing equipment is read out in Step S108 using the data reading section 12. Here, the configuration can be such that either all or a part of the image data recorded in the medium 6 or in the photographing equipment are written into the information recording medium 9. If only the selected image data is to be written, the selection of the image data is carried out using the display section 10 and the operation section 11.

Here, as a method of preventing fraudulent data recording in the present preferred embodiment, although the use of an information recording medium 9 brought in by the customer is prevented by having a configuration in which a write enable information is recorded in the medium at the cash register, it is also possible to sell information recording media 9 in which the write enable information has already been written, or to affix an IC tag, etc., at the time of selling the information recording medium 9 at the cash register.

Next, in Step S109, the read out image data is copied on to the information recording medium 9 using the data writing section 14. Here, it is possible to have a configuration in which the image data that has been read out is recorded as it is in the information recording medium 9, or else, since the image data from a digital camera 7 is usually stored in a format that is unique for digital cameras, very often it is not possible for the data to be read as it is by a PC, and also due to the improvements in performance of digital cameras in the recent years, the sizes of the individual image data has become large and it is difficult to use the data as it is because the data size is too large.

In this context, for example, it is possible to have a configuration in which a data conversion section 15 is provided in the data recording terminal 3, the formats unique to different types of digital cameras are converted into a commonly used format (for example, jpeg, etc.,), converting the number of pixels of the image data to a size that is easy to use in a PC or for photo service, and in the converted image data (or both the original image data and the converted image data) is recorded in the information recording medium 9. Also, since the file name assigned beforehand to the image data can conflict with the file name used for recording when reading image data from a plurality of media 6 or from media 6 and photographing equipment, it is possible to have a configuration in which the file name of the image data is renamed automatically by the data conversion section 15.

Thereafter, in Step S110, the information recording medium 9 in which the image data has been recorded is ejected and the data recording process is terminated.

In this manner, according to the data recording program as well as the information recording medium, the data recording terminal 3, the data recording system 1, and the data recording method, by having a configuration in which, when backing up the image data recorded in the media 6 or in the photographing equipment brought in by the customer in a different information recording medium 9, the write enable information is recorded in the information recording medium 9 at the time the customer buys an information recording medium 9 stacked on the shop shelf 4 at the cash register, and the writing of data is permitted by the data recording terminal 3 only when the write enable information has been recorded in the information recording medium 9, it is possible to prevent the fraudulent use of an information recording medium that has been brought by the customer or has been taken from the shop shelf without passing through the cash register.

### [Preferred Embodiment 2]

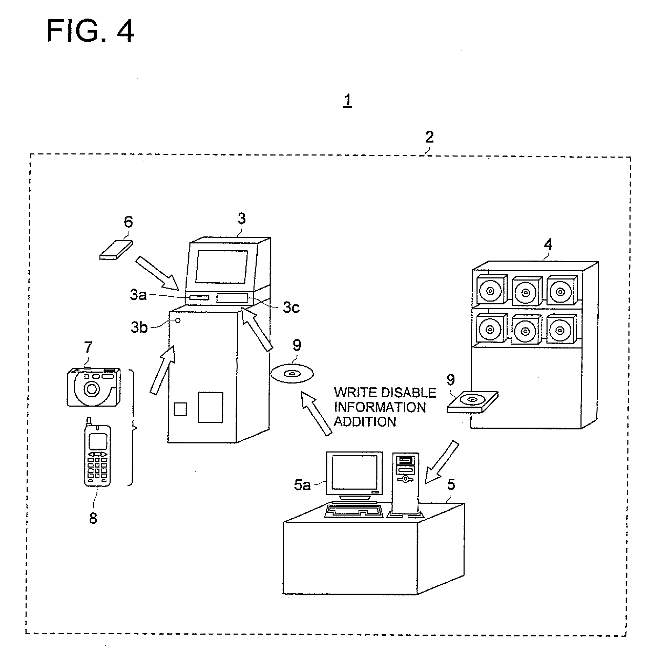

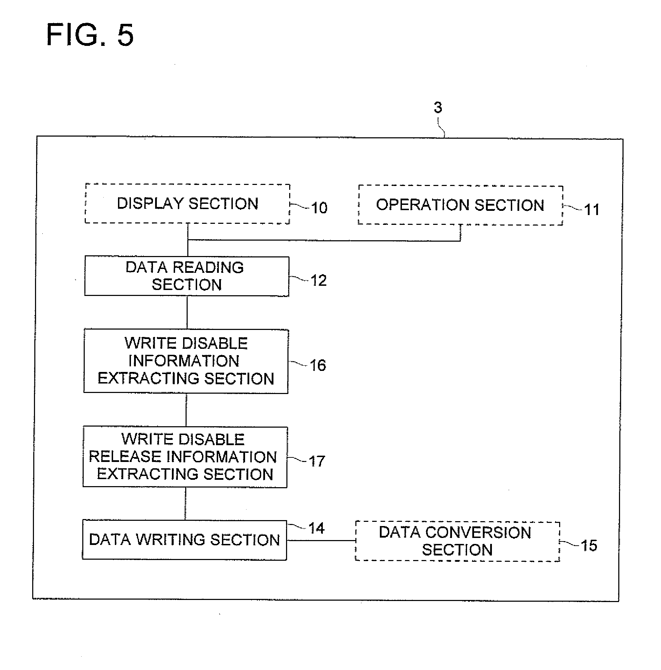

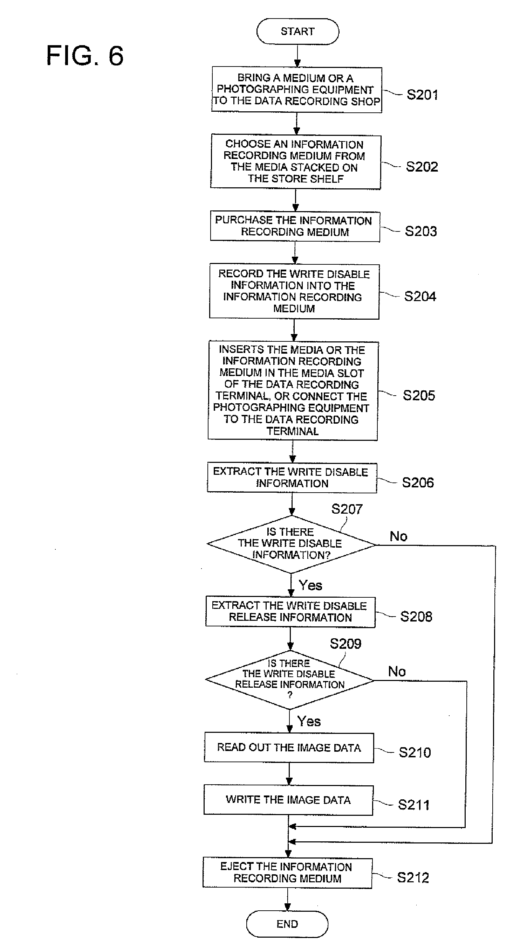

Next, the data recording program along with information recording medium, data recording terminal, data recording system, and data recording method according to the second preferred embodiment of the present invention are explained below while referring to Figure 4 to Figure 6. Figure 4 is a diagram showing schematically the configuration of the data recording system according to the present preferred embodiment, and Figure 5 is a block diagram showing the functions of the data recording terminal. Further, Figure 6 is a flow chart showing the procedure of recording the data. In addition, the present preferred embodiment has the feature that fraudulent data recording is prevented using a combination of the write disable information and the write disable release information.

As is shown in Figure 4, the data recording system 1 in the present preferred embodiment is one that is installed in a convenience store or a photo service shop such as a minilab, etc., and comprises a data recording terminal 3 that records the image data in various types of media or the image data recorded in photographing equipment such as digital cameras or mobile telephones with cameras into another information recording medium 9 such as a CD-R/RW disk, a DVD±R/RW disk, a DVD-RAM disk, a Blu-ray disk, or an MO disk, etc., (in the following the explanation are given assuming this to be a CD-R disk as in the first preferred embodiment), a shop shelf 4 on which are stacked the information recording media 9 in which are recorded beforehand the write disable information, and the cash register 5 for selling to the customers the information recording media 9 after recording in them the write disable release information indicating that data write disabling for that information recording media 9 has been released.

When explained in terms of its functions, this data recording terminal 3 becomes as shown in Figure 5 and is provided with a data reading section 12 that reads in image data from a media 6 or from a photographing equipment, a write disable information extracting section 16 that extracts the write disable information from an information recording medium 9, a write disable release information extracting section 17 that extracts the write disable release information from an information recording medium 9, and a data writing section 14 that writes, after referring to the write disable information and the write disable release information, the image data read in from a media 6 or from a photographing equipment into the information recording medium 9. In addition, if necessary, it is also possible to provide a display section 10 or an operation section 11 that is used for giving instructions regarding the data recording operations, and a data conversion section 15 that converts the format, name, or size, etc., of the image data read in from the media 6 or from the photographing equipment according to the wishes of the customer or to suit the photo service. Further, as in the first preferred embodiment, each of the above section can be configured as hardware, or else, it is also possible to configure each of these section by installing in the data recording terminal 3 a data recording program that makes the computer function, at least, as the write disable information extracting section 16, a write disable release information extracting section 17, and the data writing section 14. In addition, as in the first preferred embodiment, the form of the data recording terminal 3 can be any thing, and it is possible to use instead of a kiosk type data recording terminal 3 a desk-top type shop-counter terminal, or can be a PC in which the above software (data recording program) is installed, or can be a dedicated set-top box, or can be configured as a portable writer, and can also be a DVD recorder, etc., that is provided with a storage section or a computing section.

In a data recording system of the above configuration, the procedure of recording the image data read out from a medium 6 or from a photographing equipment brought by the customer into an information recording medium 9 is explained here referring to the flow chart shown in Figure 6.

To start with, in Step S201, the customer brings a medium 6 or a photographing equipment in which image data has been recorded to the data recording shop 2 such as a convenience store or a photo shop in which a data recording terminal 3 has been installed, and in Step S202, the customer chooses an information recording medium 9 from the media stacked on the store shelf 4 such as CD-Rs, etc. In the case of the present preferred embodiment, the information recording medium 9 has recorded in it beforehand the write disable information indicating that writing information into that disk has been disabled. Also, the content of this write disable information is not particularly limited and it is possible to have a configuration of this information so that the data indicating that writing is disabled or files are stored in a specific area of the information recording medium 9, or else the write disable condition is distinguished by the fact that a specific data or file has not been recorded in a specific area of the information recording medium 9. Further, it is desirable that the write disable information has been processed so that it cannot be copied easily by the customer. In addition, it is desirable that the information recording media 9 stacked on the store shelf 4 have their added value increased by providing a specific design print on the surface of the CD-R.

Next, in Step S203, when the customer purchases the information recording medium 9 by paying a specific price at the cash register, in Step S204, the shop attendant of the data recording shop 2 inserts the information recording medium 9 purchased by the customer into the computer terminal 5a, operates the computer terminal 5a thereby writing in the information recording medium 9 the write disable release information indicating that the write disable state has been released. The content of this write disable release information is not particularly limited similar to the write disable information and it is possible to have a configuration of this information so that the data or files indicating that the write disable state has been released are stored in a specific area of the information recording medium 9, or else, the write disable release condition is distinguished by the fact that a specific data or file has not been recorded in a specific area of the information recording medium 9. Further, it is desirable that the write disable release information has been processed so that it cannot be copied easily by the customer. For example, it is possible to prevent fraudulent copying by recording the write disable release information in an area outside the logical address area that cannot be accessed by the OS of the PC, in concrete terms, by writing in the area on the inside of the logical address area of a disk-type recording media.

Next, in Step S205, the customer who has bought the information recording medium 9 legally inserts the media 6 in the media slot 3a of the data recording terminal 3 (or connects the digital camera 7 or the mobile telephone with camera 8 to the connecting pins 3b, or both) and also inserts the information recording medium 9 in the CD-R drive 3c of the data recording terminal 3.

Next, in Step S206, the data recording terminal 3 searches for the write disable information from the information recording medium 9 (searches for the data or file corresponding to the write disable information) using the write disable information extracting section 16. If the write disable information has been recorded in the information recording medium 9 (Step S207), in Step S208, in a similar manner the write disable release information is searched from the information recording medium 9 (searches for the data or file corresponding to the write disable release information) using the write disable release information extracting section 17. Also, if the write disable information has not been recorded in the information recording medium 9 in Step 207, it is judged that a fraudulent information recording medium has been inserted, the information recording medium is ejected and the processing is terminated in Step S212.

Further, if the write disable release information has been recorded in the information recording medium 9 (Step S209), in Step S210, the image data recorded in the medium 6 or the image data recorded in the photographing equipment is read out using the data reading section 12. Also, if the write disable release information has not been recorded in the information recording medium 9 in Step 209, it is judged that a fraudulent information recording medium has been inserted, the information recording medium is ejected and the processing is terminated in Step S212. Here, the configuration can be such that either all or a part of the image data recorded in the medium 6 or in the photographing equipment are written into the information recording medium 9, and if only the selected image data is to be written, the selection of the image data is carried out using the display section 10 and the operation section 11.

Here, as a method of preventing fraudulent data recording, although in the first preferred embodiment, the use of an information recording medium 9 brought in by the customer is prevented by having a configuration in which a write enable information is recorded at the cash register in the information recording medium in which no data has been written, in the configuration of the first preferred embodiment it is not possible to distinguish between a blank CD-R and an information recording medium 9 that is placed on the shop shelf. In contrast with this, since the configuration in the present preferred embodiment is such that the write disable information is written beforehand in the information recording media 9 before they are put on the shop shelf, and the write disable release information is written into the information recording medium 9 at the cash register 5, it is possible to distinguish between the information recording media 9 stored on the shop shelf and a blank CD-R thereby increasing the added value.

Next, in Step S211, the read out image data is copied on to the information recording medium 9 using the data writing section 14. At this time, similar to the first preferred embodiment, it is possible to have a configuration in which a data conversion section 15 is provided in the data recording terminal 3, the formats unique to different types of digital cameras are converted into a commonly used standardized format, converting the number of pixels of the image data to a size that is easy to use in a PC or for photo service, the file name of the image data is renamed automatically, and the converted image data (or both the original image data and the converted image data) is recorded in the information recording medium 9.

Thereafter, in Step S212, the information recording medium 9 is ejected and the processing is terminated.

In this manner, according to the data recording program as well as the information recording medium, the data recording terminal 3, the data recording system 1, and the data recording method, by having a configuration in which, when backing up the image data recorded in the media 6 or in the photographing equipment brought in by the customer in a different information recording medium 9, the information recording media 9 in which the write disable information has been recorded beforehand are kept on the shop shelf, the write disable release information is recorded at the cash register in the information recording medium 9 at the time the customer buys an information recording medium 9 stacked on the shop shelf 4, and the writing of data is permitted by the data recording terminal 3 only when both the write disable information and the write disable release information have been recorded in the information recording medium 9, it is possible to prevent the fraudulent use of an information recording medium that has been brought by the customer or has been taken from the shop shelf without passing through the cash register.

### [Preferred Embodiment 3]

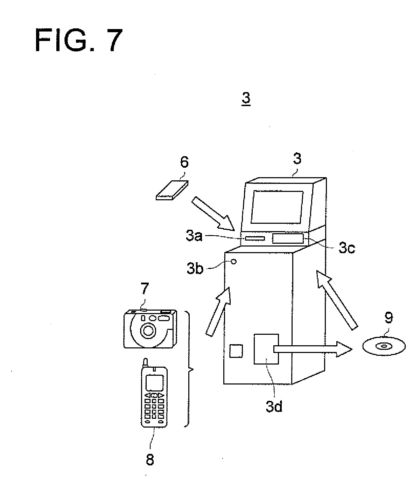

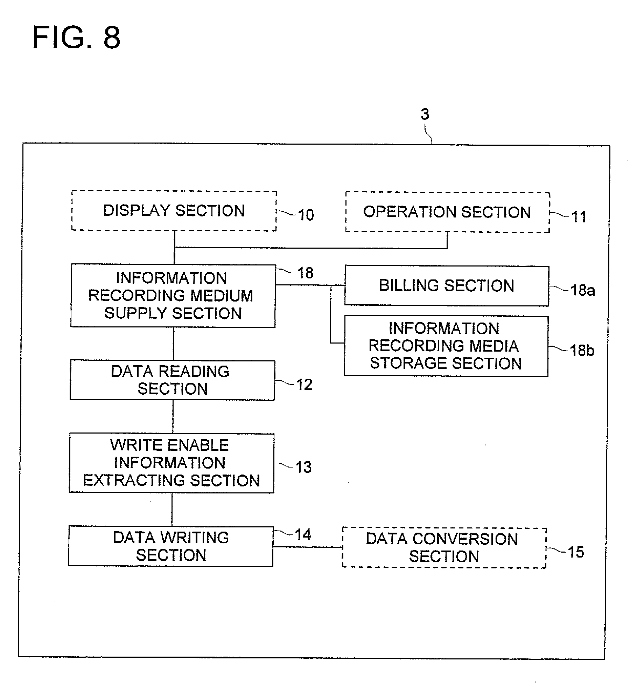

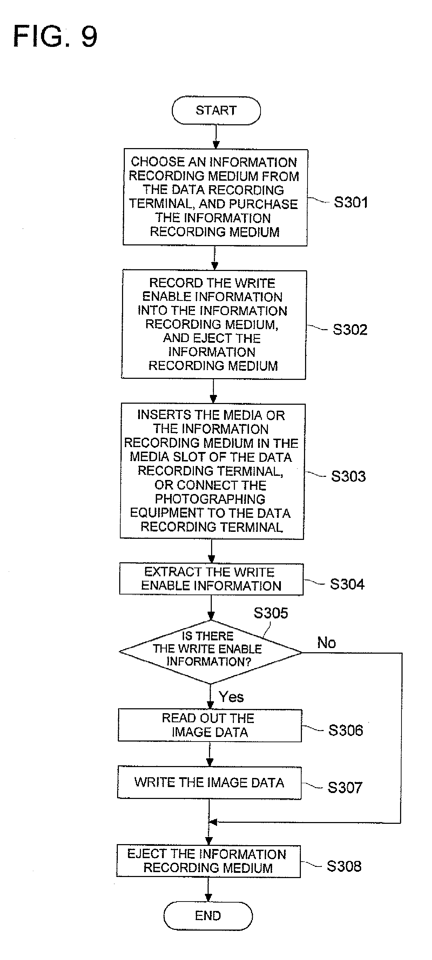

Next, the data recording program along with information recording medium, data recording terminal, data recording system, and data recording method according to the third preferred embodiment of the present invention are explained below while referring to Figure 7 to Figure 9. Figure 7 is a diagram showing schematically the configuration of the data recording system according to the present preferred embodiment, and Figure 8 is a block diagram showing the functions of the data recording terminal. Further, Figure 9 is a flow chart showing the procedure of recording the data. In addition, the present preferred embodiment has the feature that the information recording medium 9 is sold at the data recording terminal 3, and the configurations of all other parts is identical to that of the first preferred embodiment.

As is shown in Figure 7, the data recording terminal 3 in the present preferred embodiment is provided with the function of selling the information recording medium 9 in which the data is to be written, and of recording, based on the write enable information, the image data in various types of media 6 or the image data recorded in photographing equipment such as digital cameras or mobile telephones with cameras 8 into another information recording medium 9 such as a CD-R/RW disk, a DVD±R/RW disk, a DVD-RAM disk, a Blu-ray disk, or an MO disk, etc., (this is taken as a CD-R disk in the following).

When explained in terms of its functions, this data recording terminal 3 becomes as shown in Figure 8 and is provided with an information recording medium supply section 18 that supplies the information recording media 9, a display section 10 and an operation section 11 for carrying out operations at the time of purchasing the information recording medium 9, a data reading section 12 that reads in image data from a media 6 or from a photographing equipment, a write enable information extracting section 13 that extracts the write enable information from an information recording medium 9, and a data writing section 14 that writes the image data read in from a media 6 or from a photographing equipment into the information recording medium 9. In addition, the information recording medium supply section 18 is provided with a billing section 18a for collecting money towards the information recording medium 9 and information recording media storage section 18b for storing the information recording media 9, and, if necessary, it is also possible to provide a data conversion section 15 that converts the format, name, or size, etc., of the image data read in from the media 6 or from the photographing equipment. Further, as in the first and second preferred embodiments, each of the above section can be configured as hardware, or else, it is also possible to configure each of these section by installing in the data recording terminal 3 a data recording program that makes the computer function, at least, as the write enable information extracting section 13 and the data writing section 14.

Further, in the present invention, since the information recording medium supply section 18 is provided in the data recording terminal 3, the shop shelf 4 on which are stacked the information recording media 9 and the cash register 5 for selling the information recording media 9 to the customers in the data recording shop 2 are not necessary. Therefore, in the present preferred embodiment, because it is possible to make the data recording terminal 3 a non-attended automatic terminal, the location of installing the data recording terminal 3 is not limited to convenience stores or photo shops but the installation can be made anywhere. In addition, as in the first and second preferred embodiments, the form of the data recording terminal 3 can be any thing, and it is possible to use instead of a kiosk type data recording terminal 3 a desk-top type shop-counter terminal, or can be a PC in which the above software (data recording program) is installed, or can be a dedicated set-top box, or can be configured as a portable writer, and can also be a DVD recorder, etc., that is provided with a storage section or a computing section.

The procedure of recording the image data read out from a medium 6 or from a photographing equipment brought by the customer into an information recording medium 9 using a data recording terminal 3 with the above configuration is explained here referring to the flow chart shown in Figure 9.

To begin with, in Step S301, the user purchases an information recording medium 9 such as a CD-R disk stored inside the data recording terminal 3 by utilizing the display section 10 and the operation section 11 of the data recording terminal 3. In Step S302, the write enable information is recorded in the information recording medium 9 that has been purchased and this medium is discharged for the time being from the discharge outlet 3d. In the present preferred embodiment, since the information recording medium 9 is stored inside the data recording terminal 3 and it is not possible to take it out fraudulently from a shop shelf 4, the configuration can be such that the stored information recording media 9 have the write enable information recorded in them beforehand. In addition, although it is possible not to discharge temporarily the purchased information recording medium 9 but to carry out the writing of image data in it while the information recording medium 9 is still inside the data recording terminal 3, it is desirable to temporarily discharge the purchased information recording medium 9 because it is possible that no image data is written at that time of purchase of the medium. Further, as in the first and second preferred embodiments, it is possible to have a configuration in which the write enable information is written in an area that cannot be accessed by the OS of the PC such as the area outside the logical address area, in concrete terms, by writing in the area on the inside of the logical address area of a disk-type recording media.

Next, in Step S303, the customer who has bought the information recording medium 9 legally inserts the media 6 in the media slot 3a of the data recording terminal 3 (or connects the digital camera 7 or the mobile telephone with camera 8 to the connecting pins 3b, or both) and also inserts the information recording medium 9 in the CD-R drive 3c of the data recording terminal 3.

Next, in Step S304, the data recording terminal 3 searches for the write enable information from the information recording medium 9 (searches for the data or file corresponding to the write enable information) using the write enable information extracting section 13. If the write enable information has not been recorded in the information recording medium 9 (Step S305), it is judged that a fraudulent information recording medium has been inserted, the information recording medium is ejected and the processing is terminated in Step S308.

Further, if the write enable information has been recorded in the information recording medium 9 (Step S305), the image data recorded in the medium 6 or the image data recorded in the photographing equipment is read out in Step S306 using the data reading section 12. Here, similar to the first and second preferred embodiments, the configuration can be such that either all or only a part of the image data recorded in the medium 6 or in the photographing equipment are written into the information recording medium 9, and if only the selected image data is to be written, the selection of the image data is carried out using the display section 10 and the operation section 11.

Next, in Step S307, the read out image data is copied on to the information recording medium 9 using the data writing section 14. At this time, similar to the first and second preferred embodiments, for example, it is possible to have a configuration in which a data conversion section 15 is provided in the data recording terminal 3, and the formats unique to different types of digital cameras are converted into a commonly used format, converting the number of pixels of the image data to a size that is easy to use in a PC or for photo service, and, after carrying out the processing such as automatically renaming the files of the image data, and recording the converted image data (or both the original image data and the converted image data) in the information recording medium 9.

Thereafter, in Step S308, the information recording medium 9 is ejected and the processing is terminated.

In this manner, according to the data recording program as well as the information recording medium, the data recording terminal 3, the data recording system 1, and the data recording method, by having a configuration in which, when backing up the image data recorded in the media 6 or in the photographing equipment brought in by the customer in a different information recording medium 9, the information recording media 9 are stored inside the data recording terminal and the information recording medium 9 purchased by the customer is supplied after the writing the write enable information, and the writing of data is permitted by the data recording terminal 3 only when the write enable information has been recorded in the information recording medium 9, it is possible, as in the first preferred embodiment, to prevent the fraudulent use of an information recording medium that has been brought by the customer. Further, in the case of the present preferred embodiment, since the data recording terminal 3 itself is provided with a function of selling the information recording media 9, it is possible to operate the terminal 3 in a non-attended manner and to obtain the effect that the data recording terminal 3 can be installed in any location.

Further, although in each of the above preferred embodiments, the explanation was given for the case of recording the image data of photographs in another information recording medium, the present invention shall not construed to be limited to the above preferred embodiments, and in the present invention can be applied to a program, as well as information recording medium, terminal, system, and method of recording the data stored in any equipment or the information recording medium in another information recording medium such as, for example, of recording music data downloaded using a communication equipment in a minidisk, etc.

### INDUSTRIAL APPLICABILITY

As has been explained above, according to the data recording program as well as the information recording medium, data recording terminal, data recording system, and data recording method disclosed in the present invention, it is possible to prevent the recording of data using a fraudulent information recording medium.

The reason for this is that, it is possible to distinguish the information recording media that were either brought in by the customer or were taken out of the shop shelf without passing through the cash register, by stacking information recording media in the shop shelf inside the shop, recording at the cash register the write enable information in the purchased information recording media and permitting, and in the data recording terminal, by permitting the writing of image data only in an image recording medium in which the write enable information has been recorded.

Further, this is because it is possible, in a similar manner, to distinguish the information recording media that were either brought in by the customer or were taken out of the shop shelf without passing through the cash register, even by stacking in the shop shelf inside the shop the information recording media in which a write disable information has been recorded beforehand, recording at the cash register the write disable release information in the purchased information recording medium, and in the data recording terminal, by permitting the writing of image data only in an image recording medium in which both the write disable information and the write disable release information have been recorded.

Furthermore, this is because it is possible, in a similar manner, to distinguish the information recording media that were brought in by the customer, in the case of a data recording terminal provided with the function of selling information recording media, by storing beforehand information recording media in the data recording terminal and supplying the purchased information recording medium after recording the write enable information in it.

Therefore, by using such a data recording system it is possible even for a customer not familiar with operating a PC to prepare backups, etc., by recording easily the image data obtained using a digital camera or a mobile telephone with camera in a different information recording medium, and to maintain the digital camera or mobile telephone with camera always in a state in which they can record image data. Because of this, it is possible to promote the taking of photographs by the customers and to enlarge the use of photo services associated with image data.

## Claims

1. A data recording program to control a computer to function as a data recording terminal, comprising:
an extracting section to extract a write enable information which shows permitting the writing of data from an information recording medium; and
a data writing section to permit writing data to the information recording medium with which the write enable information was recorded.

2. A data recording program to control a computer to function as a data recording terminal, comprising:
a write disable information extracting section to extract a write disable information which shows prohibiting the writing of data from an information recording medium;
a write disable release information extracting section to extract a write disable release information which shows to release the prohibit on writing of data from the information recording medium; and
a data writing section to prohibit writing data to the information recording medium with which the write disable information was recorded, and to permit writing data to the information recording medium with which the write disable release information was recorded.

3. An information recording medium comprising:
a write disable information including information which prohibit the writing of data; and
a write enable information including information which permit the writing of data.

4. An information recording medium comprising:
a write disable information including information which prohibit the writing of data; and
a write disable release information including information which release the prohibiting of writing of data.

5. A data recording terminal record the data recorded in an equipment or in a first information recording medium into a second information recording medium, comprising:
a reading out section to read out the data from either the equipment or the first information recording medium;
a extracting section to extract a write enable information which shows permitting the writing of data from the second information recording medium;
a data writing section to permit writing data to the second information recording medium with which the write enable information was recorded.

6. A data recording terminal record the data recorded in an equipment or in a first information recording medium into a second information recording medium, comprising:
a reading out section to read out the data from either the equipment or the first information recording medium;
a write disable information extracting section to extract a write disable information which shows prohibiting the writing of data from the second information recording medium;
a write disable release information extracting section to extract a write disable release information which shows to release the prohibit on writing of data from the second information recording medium; and
a data writing section to prohibit writing data to the second information recording medium with which the write disable information was recorded, and to permit writing data to the second information recording medium with which the write disable release information was recorded.

7. The data recording terminal of claim 5, wherein the equipment is a digital camera or a mobile telephone with camera, the first recording medium is an information recording medium which can be detached and attached to apparatus, and the data is image data of photographs taken using the equipment.

8. A data recording system comprising:
a write enable information recording section to record a write enable information which shows permitting the writing of data to an information recording medium; and
a data writing section to permit writing data to the information recording medium with which the write enable information was recorded.

9. A data recording system comprising:
an information recording medium having a write disable information which shows prohibiting the writing of data;
a write disable release information recording section to record a write disable release information which shows to release the prohibit on writing of data to the information recording medium; and
a data writing section to prohibit writing data to the information recording medium with which the write disable information was recorded, and to permit writing data to the information recording medium with which the write disable release information was recorded.

10. The data recording system of claim 8, further comprising:
a exhibiting section to exhibit an information recording medium on shop selves;
an information recording terminal to record at least one of the write enable information and a write disable release information to the information recording medium; and
a data recording terminal having the data writing section.

11. A data recording method which record the data recorded in an equipment or in a first information recording medium into a second information recording medium, comprising steps of:
recording a write enable information which shows permitting the writing of data to the second information recording medium;
extracting the write enable information from the second information recording medium, in a data recording terminal;
reading the data recorded in the equipment or in the first information recording medium when the write enable information is recorded on the second information recording medium; and
writing the read data in the second information recording medium.

12. A data recording method which record the data recorded in an equipment or in a first information recording medium into a second information recording medium, comprising steps of:
exhibiting a information recording medium with which a write disable information was recorded, wherein the write disable information including information which prohibit the writing of data;
recording the write disable release information which shows that the prohibit on the writing of the data based on the write disable information was released to the second information recording medium;
extracting the write disable information from the second information recording medium, in a data recording terminal;
extracting the write disable release information from the second information recording medium, in a data recording terminal;
prohibiting the writing of data when the write disable information is recorded on the second information recording medium;
permitting the writing of data when the write disable release information is recorded on the second information recording;
reading the data recorded in the equipment or in the first information recording medium based on judgment of prohibition or permission;
writing the read data in the second information recording medium.

13. The data recording method of claim 11, wherein the equipment is a digital camera or a mobile telephone with camera, the first recording medium is an information recording medium which can be detached and attached to apparatus, and the data is image data of photographs taken using the equipment.
